# EUROPÄISCHE PATENTANMELDUNG

(11) **EP 1 302 928 A1**
(43) Veröffentlichungstag der Anmeldung: **16.04.2003**
(21) Anmeldenummer: 01124717.8
(22) Anmeldetag: 16.10.2001
(51) Int. Cl.: G10L 15/26, G10L 15/06, G10L 13/08

(54) **Verfahren zur Spracherkennung, insbesondere von Namen, und Spracherkenner**

(71) Anmelder: SIEMENS AKTIENGESELLSCHAFT, 80333 München (DE)
(72) Erfinder: Kunstmann, Niels, Dr., 85540 Haar (DE); Schroeer, Andreas, 80337 München (DE); Steinmassl, Günter, 82335 Berg (DE); Wandinger, Michael, 81829 München (DE)

(57) **Zusammenfassung**

Verfahren zur Spracherkennung, insbesondere von Namen, mit einer Eingabephase zur Erstellung eines Spracherkenner-Vokabulars, die eine Verifizierung einer Text-Eingabe eines neuen Wortes im Ansprechen auf eine akustische Ausgabe oder auf eine Aufforderung zum Einsprechen des Wortes umfaßt.

## Beschreibung

Die Erfindung betrifft ein Verfahren zur Spracherkennung, insbesondere von Namen, sowie einen entsprechenden Spracherkenner.

Im Zusammenhang mit der zunehmenden Funktionsvielfalt und Komplexität elektronischer Geräte im kommerziellen und privaten Einsatz - wie etwa von Mobil- und Schnurlostelefonen, Handheld-PCs bzw. PDAs, Audio- bzw. Videosystemen und Fernbedienungen - ist der Bedienbarkeit dieser Geräte immer größeres Augenmerk zu schenken. Herkömmliche Eingabetastaturen werden den Anforderungen immer weniger gerecht. Daher gewinnt neben berührungsempfindlichen Anzeigefeldern (Touchscreens) und menügeführten Tastatureingaben die Sprachsteuerung immer größere Bedeutung. Sie ermöglicht auch bei hochgradig miniaturisierten Geräten mit sehr kleiner nutzbarer Bedienfläche die leichte Steuerung komplexer Funktionen und vor allem eine sehr schnelle Eingabe von Namen, Notizen und ganzen Texten.

In der phonembasierten Spracherkennung müssen für alle dem Vokabular zugehörigen Wörter die ihnen entsprechenden Phonemfolgen bekannt sein. Diese Phonemfolgen werden beim Training des Spracherkenners im Vokabular eingetragen. Während des Betriebes, des eigentlichen Erkennungsvorgangs, wird dann im sogenannten Viterbi-Algorithmus eine Suche nach dem besten Pfad durch die gegebenen Phonemfolgen ausgeführt, die den eingesprochenen Wörtern entsprechen.

Bei hoch entwickelten Spracherkennern findet keine bloße Einzelworterkennung statt, sondern es können auch die Wahrscheinlichkeiten für Übergänge zwischen Wörtern modelliert und in den Viterbi-Algorithmus einbezogen werden. Einzelheiten hierzu finden sich in der einschlägigen Fachliteratur.

Die phonetischen Umschriften für die zu erkennenden Wörter sind die Basis der phonembasierten Erkennung. In jedem Anwendungsszenario für eine derartige Erkennung stellt sich daher die Frage, wie derartige phonetische Umschriften gewonnen werden können. Insbesondere stellt sich diese Frage, wenn man - wie in miniaturisierten elektronischen Geräten ("Handhelds") - keine großen Datenbanken oder keine große Rechenleistung zur Verfügung hat, um phonetische Umschriften für Vokabulareinträge zu generieren, die dem System bisher nicht bekannt sind. Das Problem stellt sich verstärkt, wenn man z. B. die bisherige sprecherabhängige sogenannte Namenswahl, d. h. den sprachgesteuerten Aufruf gespeicherter Rufnummern über den Namen des Teilnehmers, bei Mobiltelefonen durch eine sprecherunabhängige Wahl aufgrund phonembasierter Erkennung ersetzen will. Dann müssen für die Einträge des Telefonbuchs die phonetischen Umschriften auf dem Gerät ermittelt werden.

Zur Gewinnung der phonetischen Umschriften von Worten gibt es bereits einige Ansätze, die in kommerziellen Systemen Verwendung finden. Es wird hier auf die sogenannten Diktiersysteme, die im allgemeinen auf einem PC zur Ausführung kommen, und auf die sogenannten Auto-Attendants, sprachbasierte Telefonvermittlungssysteme, Bezug genommen.

Bei Diktiersystemen ist im Normalfall ein Lexikon von typischerweise mehreren zehntausend Wörtern mit den Zuordnungen von Buchstabenfolgen zu Phonemfolgen hinterlegt. Neue Worte werden hinzugefügt, indem der Benutzer die Orthografie der Wörter (die Grapheme) angibt und diese dem System vorspricht. Das vorgesprochene Wort wird durch einen Phonemketten-Erkenner analysiert und die so gewonnene Phonemfolge dem Lexikon hinzugefügt. Es gibt weiterhin Varianten des geschilderten Verfahrens, die nicht die Phoneme, sondern andere konstituierende Einheiten dem Lexikon hinzufügen.

Bei sogenannten Auto-Attendants soll ein sprachgesteuertes Telefonvermittlungssystem aufgebaut werden, das nach Nennung des Namens des gewünschten Ansprechpartners direkt zu diesem weitervermittelt. Die Konfigurationstabelle eines derartigen Systems enthält also die Namen aller Telefonteilnehmer (beispielsweise eines Unternehmens) mit den zugehörigen Durchwahlnummern. Zur Konfiguration des Vokabulars für den Erkenner müssen also die Namen anhand ihrer Orthografie in Phonemsequenzen umgesetzt werden.

Generell kann die Umsetzung von einer Schreibweise eines Wortes in die Phonemfolge der zugehörigen Aussprache automatisiert erfolgen. Das kann durch Nachschlag in einem Namens-Lexikon geschehen, was aber wegen der großen Anzahl verschiedener Schreibweisen von Namen wenig praktikabel ist. Zudem unterliegen derartige Lexika dem Copyright-Schutz, so daß ihre Nutzung durch Dritte kostenintensiv werden kann.

Weiterhin kann man Systeme verwenden, die die Umsetzung regelbasiert oder durch speziell auf Namen trainierte neuronale Netze durchführen. Ein Anbieter eines Auto-Attendants bietet seinen Kunden den Service, die phonetischen Umschriften nach Zusendung der o. g. Konfigurationstabelle auf Diskette in kodierter Form zu übermitteln.

Andere Systeme geben orthografische Umsetzungsregeln an, wie bestimmte Namen zu schreiben sind, damit dann die korrekte phonetische Umschrift erzeugt wird. Z. B. gibt es den Hinweis, dass in einem System mit deutschen Phonemen der Name "Jacques Chirac" als "Schack Schirack" zu schreiben ist, damit eine korrekte Umschrift erfolgen kann. Hierfür ist unter Umständen spezielles Know-how beim Systemeinrichter erforderlich.

Namen, die in verschiedenen Sprachen oder Dialekten oder in Abhängigkeit vom Bildungsgrad des Sprechers unterschiedlich ausgesprochen werden, stellen ein spezifisches Problem der Spracherkennung von Namen dar. Die Phoneminventare der Spracherkenner sind in der Regel einsprachig und insofern "eindimensional", als sie unterschiedliche Aussprachemöglichkeiten ein und desselben Wortes nicht oder nur bedingt berücksichtigen können.

Der Erfindung liegt daher die Aufgabe der Bereitstellung eines verbesserten Spracherkennungsverfahren und Spracherkenners - speziell für Eigennamen - zugrunde, welche eine hohe Erkennungsgenauigkeit mit relativ geringem Implementierungsaufwand liefern.

Diese Aufgabe wird in ihrem Verfahrensaspekt durch ein Verfahren mit den Merkmalen des Anspruchs 1 bzw. 4 und in ihrem Vorrichtungsaspekt durch einen Spracherkenner mit den Merkmalen des Anspruchs 6 bzw. 9 gelöst.

Die Erfindung schließt den wesentlichen Gedanken ein, das bestehende Problem interaktiv mit dem Benutzer zu lösen. Dies erfolgt einerseits durch Verwendung von akustischem Feedback über eine gewonnene Umschrift, andererseits kann man die Abläufe bei der Ersteinrichtung des Vokabulars für den Benutzer vereinfachen. Das vorgeschlagene Verfahren sieht also in einer ersten Ausprägung der Erfindung die Kombination einer Text-Phonem-Wandlung mit einer anschließenden Phonem-Sprache-Umsetzung vor. In einer zweiten Ausprägung des Erfindungsgedankens wird eine Einzelworterkennung aufgrund eines zusätzlichen Einsprechens neuer Worte (speziell Namen) durch den Benutzer praktiziert, die in gewissem Sinne eine andere Art der Verifizierung von aus der Text-Eingabe erstellten Hypothesen darstellt.

Mit dem vorgeschlagenen Verfahren werden Bedienbarkeit und Erkennungsgenauigkeit bei der sprecherunabhängigen Namenswahl deutlich erhöht, ohne daß an die hardwareseitigen Voraussetzungen des Spracherkenners erhöhte Anforderungen gestellt würden.

Schließlich gehören zum vorgeschlagenen System in der ersten Ausführung Steuerungs- und Verarbeitungselemente, welche die Abwicklung einer Vorspiel- und Bestätigungs-Prozedur im Zusammenwirken von Phonemkettenerkenner-Modul und Sprachsynthese-Modul gemäß dem vorgeschlagenen Verfahren gewährleisten. In der zweiten Ausprägung des Systemgedankens sind ein Einzelworterkenner und Spracheingabemittel und entsprechende Steuerungs- und Verarbeitungselemente zur Sicherstellung ihres Zusammenwirkens vorgesehen.

Zu einem entsprechenden System gehört einerseits ein Umwandlungsmodul, das ein in Textform eingegebenes Wort in eine Phonemfolge umwandelt. Andererseits gibt es - bei der ersten Ausführung - ein Sprachsynthese-Modul, das die gewonnene Phonemfolge in eine akustische Ausgabe umwandeln kann. Letzteres Modul muss dabei keinem hohen Qualitätsanspruch genügen. Es geht nur darum, dem Benutzer einen ungefähren Eindruck zu verschaffen, wie sich eine dem Wort zugeordnete Phonemfolge anhört. Insofern ergeben sich für dieses Modul auch nicht notwendigerweise hohe Hardware-Anforderungen (wie bei Sprachsynthesesystemen, die in Telefonauskunftssystemen eingesetzt werden). Die bei der zweiten Ausführung vorgesehenen Spracheingabemittel sowie der Einzelworterkenner müssen ebenfalls keinen besonders hohen Anforderungen genügen, da sie lediglich eine Auswahl aus einer eng begrenzten Anzahl von Wort-Hypothesen ermöglichen müssen.

Es ist für die Erkennungsgenauigkeit des vorgeschlagenen Verfahrens in seiner ersten Ausprägung von Vorteil, wenn im Schritt der Graphem-Phonem-Wandlung mehrere vorläufige Phonemfolgen als Spracherkennungshypothesen gewonnen und unter Kennzeichnung ihres Wahrscheinlichkeitswertes gespeichert und in der Rangfolge ihrer Wahrscheinlichkeitswerte sukzessive der Phonem-Sprach-Wandlung und akustischen Ausgabe sowie der Auswertung der Verifizierungs-Eingabe durch den Nutzer zugrundegelegt werden, bis für eine der vorliegenden Phonemfolgen die Übernahme in das endgültige Vokabular ausführbar ist.

Vor dem Schritt der Graphem-Phonem-Wandlung wird im Ansprechen auf eine Landessprach-Eingabe ein landessprachliches Spracherkennungsmodell oder ein landessprachlich spezifizierter Verarbeitungszweig eines multilingualen Spracherkennungsmodells, insbesondere Hidden-Markov-Modells, zur Gewinnung der mindestens einen vorläufigen Phonemfolge bzw. der Menge von Phonemen aktiviert.

Vorteile und Zweckmäßigkeiten der Erfindung ergeben sich im übrigen aus den Unteransprüchen sowie der nachfolgenden Beschreibung eines bevorzugten Ablaufes einer Namenserkennung sowie eines bevorzugten grundsätzlichen Aufbaus eines Spracherkenners anhand der Figuren. Von diesen zeigen:
Fig. 1 ein schematisches Ablaufdiagramm der Eingabe eines Namens in ein Spracherkenner-Vokabular,
Fig. 2 ein modifiziertes Ablaufdiagramm,
Fig. 3 ein Funktions-Blockschaltbild einer Ausführungsform des vorgeschlagenen Spracherkenners und
Fig. 4 ein Funktions-Blockschaltbild einer zweiten Ausführungsform.

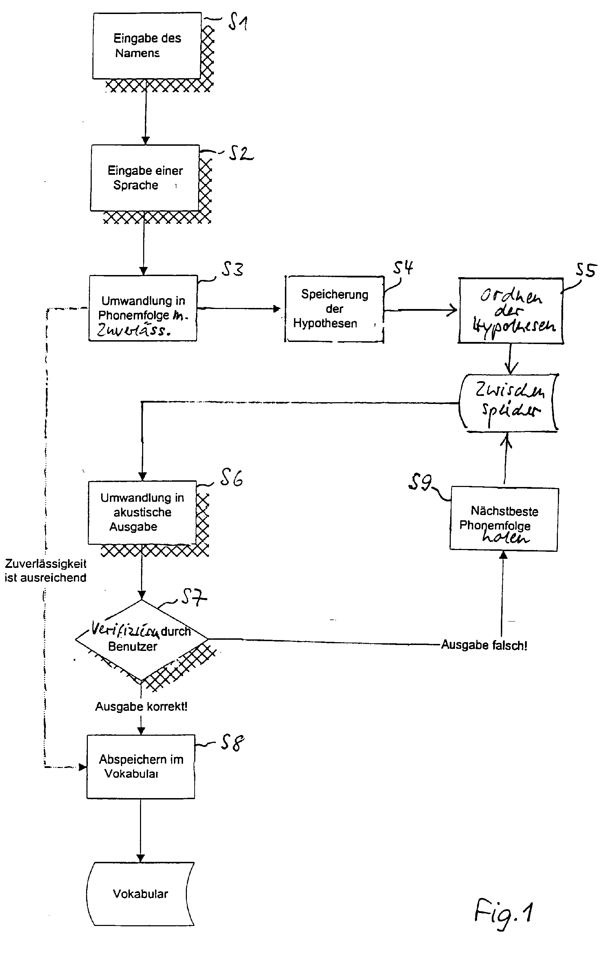

In Fig. 1 ist der Ablauf der Ergänzung eines Spracherkenner-Vokabulars um einen Namen in Form eines Flußdiagramms schematisch dargestellt.

Dabei geben schattierte Symbole Benutzerein- oder -ausgaben an. Die einzelnen Schritte sind mit Schrittnummern bezeichnet und werden im folgenden erläutert.
S1: Der Benutzer gibt einen gewünschten neuen Telefonbucheintrag (Namen) in Textform ein, etwa per alphanumerischer Tastatur oder Touchscreen.
S2: Der Benutzer stellt zusätzlich eine Information zur Verfügung, welchem Sprachraum die dem Namen entsprechende Person angehört. Dieser Schritt ist optional. Als Variante könnte man sich vorstellen, daß der Sprachraum bzw. die Nationalität aus Adressangaben o. ä. automatisch gewonnen wird.
S3: Das System wandelt den Namen (Graphemstring) je nach gewähltem Sprachraum in einen Phonemstring um.
S4/S5: Sofern sich bei dieser automatischen Umwandlung unterschiedliche Hypothesen bzgl. der Aussprache ergeben, werden diese in durch die Verlässlichkeit der Zuordnung (Konfidenz) gegebener Reihenfolge abgelegt.
S6: Die wahrscheinlichste Phonemfolge wird in eine akustische Ausgabe umgewandelt und dem Benutzer ausgegeben.
S7: Der Benutzer hat nun die Möglichkeit zu entscheiden, ob diese Aussprachevariante für den eingegebenen Namen korrekt ist.
S8: Akzeptiert der Benutzer die Ausgabe, so wird die zu Grunde liegende Phonemkette im Vokabular abgelegt.
S9: Akzeptiert der Benutzer die akustische Ausgabe nicht, so wird die nächstwahrscheinliche Phonemkette ermittelt und aus dem Zwischenspeicher geholt und es wird mit der Umwandlung dieser neuen Umschrift in eine akustische Ausgabe fortgefahren (S6).

Für bestimmte Namen, bei denen die Zuordnung aufgrund eines Lexikons eindeutig ist oder bei denen die Zuverlässigkeit der Phonemfolgenzuordnung ausreichend hoch ist, kann dieser Schritt entfallen, und das Verfahren wird direkt bei (S8) fortgesetzt.

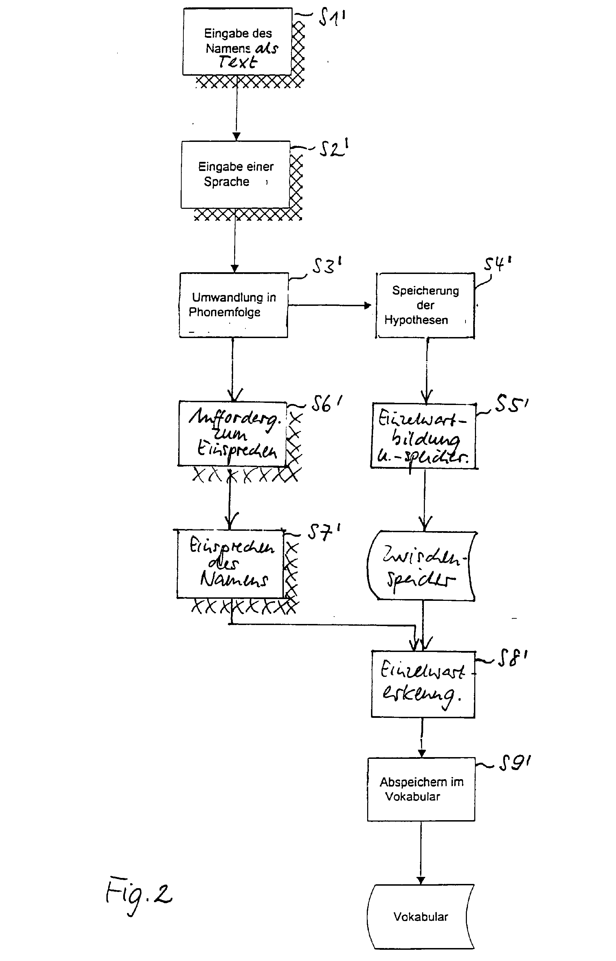

Fig. 2 zeigt in schematischer Darstellung einen gegenüber der vorgenannten Ausführungsform modifizierten Ablauf, bei dem an die Stelle der Verifizierung durch Bestätigung einer akustischen Ausgabe ein Einsprechen des neuen Wortes (Namens) durch den Benutzer tritt. Die Schritte S1' bis S4' entsprechen den Schritten S1 bis S4 in Fig. 1, und der Schritt S9' entspricht dem Schritt S8 in Fig. 1, so daß diese Schritte nachfolgend nicht nochmals erläutert werden. Es wird hier ein Einzelworterkenner eingesetzt, und die abweichenden Schritte gestalten sich wie folgt:
S5': Die aus den Graphemen gewonnenen Phoneme werden zu einer Mehrzahl möglicher Einzelworte (Wort-Hypothesen) zusammengefügt, und diese werden in einem Zwischenspeicher abgelegt.
S6'/S7': Der Benutzer erhält im Rahmen einer Menüführung eine Aufforderung zum Einsprechen des vorab als Text eingegebenen neuen Namens und führt dieses Einsprechen aus.
S8': Unter Nutzung der im Zwischenspeicher gespeicherten Wort-Hypothesen wird der eingesprochenen Lautfolge das Wort mit der höchsten Zuverlässigkeit - im Sinne einer Einzelworterkennung - zugeordnet.

Wenn im gesamten Vokabular möglicherweise viele Namen in unterschiedlichen Sprachen ausgesprochen werden, kann die Verwendung sogenannter multilingualer HMMs ("Hidden Markov Models") die Erkennung verbessern. Im Normalfall wird das bei einem von nur einer Person genutzten Mobiltelefon aber nicht der Fall sein, da die verwendete Phonetik eines Benutzer doch fast ausschließlich durch seine Muttersprache bestimmt ist. Zu bemerken ist insbesondere, dass durch den vorgegebenen Ablauf an keiner Stelle hohe Qualitätsanforderungen an die beteiligten Module in den Schritten S3 bzw. S3' und S6 bzw. S8' gestellt werden. Stattdessen ergibt sich durch den Ablauf selbst eine hohe Zuverlässigkeit des Verfahrens.

Ein bevorzugtes Anwendungsbeispiel der vorgeschlagenen Lösung ist ein Mobilfunk-Endgerät, in dem die bisherige sprecherabhängige Namenswahl, die ein Training des Sprachmusters für jeden Eintrag erfordert, durch eine sprecherunabhängige Namenswahl mit einem phonembasierten Erkenner ersetzt wird, in der die phonetischen Umschriften semiautomatisch erzeugt werden. Ein generischer Ablauf dafür ergibt sich unmittelbar aus Fig. 1 oder 2.

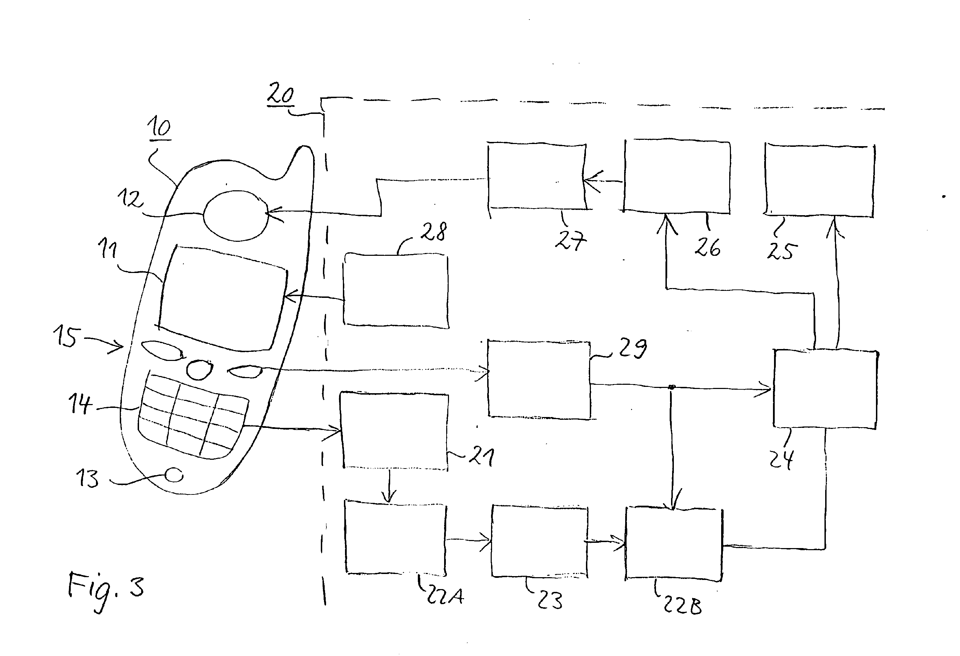

In Fig. 3 ist (als Prinzipskizze) ein Funktions-Blockschaltbild eines in einem solchen Mobiltelefon 10 implementierten Spracherkenners 20 in einer ersten Ausführung dargestellt. Vom Mobiltelefon 10 sind nur die wesentlichen Elemente seiner Benutzerschnittstelle dargestellt, nämlich ein Display 11, eine Hörkapsel 12, eine Sprechkapsel 13, eine alphanumerische Tastatur 14 (12er Tastatur) mit Mehrfachbelegung der Tasten und Softkeys 15 für Eingaben im Rahmen einer Menüführung. Vom Spracherkenner 20 sind nur die für die Erläuterung der ersten Ausführungsform der Erfindung wesentlichen Komponenten für die Erstellung des Spracherkenner-Vokabulars dargestellt.

Der Spracherkenner 20 umfaßt demnach eine eingangsseitig mit der Tastatur 14 des Mobiltelefons 10 in Verbindung stehende Graphem-Phonem-Wandlerstufe 21 zur Umwandlung eines über die Tastatur eingegebenen Wortes in eine Mehrzahl von Phonemfolgen, die jeweils mit einem Wahrscheinlichkeitswert (Konfidenz) behaftet sind. Mit der Graphem-Phonem-Wandlerstufe 21 ist ein erster Zwischenspeicher 22A zur sukzessiven Zwischenspeicherung der gewonnenen Phonemfolgen verbunden, der seinerseits mit einer Ordnungsstufe 23 zur Ordnung der Phonemfolgen nach ihrem Wahrscheinlichkeitswert verbunden ist. Die Ordnerstufe 23 ist ihrerseits mit einem zweiten Zwischenspeicher 22B zur geordneten Abspeicherung der Phonemfolgen (Hypothesen) in der Reihenfolge ihres Wahrscheinlichkeitswertes verbunden.

Der Ausgang des zweiten Zwischenspeichers 22B ist mit einer Umschalteinheit 24 verbunden, welche ausgangsseitig einerseits mit einem Vokabularspeicher 25 und andererseits mit einer Phonem-Sprach-Wandlerstufe 26 verbunden ist. Letztere wiederum ist über eine Audiostufe 27 mit der Hörkapsel 12 des Mobiltelefons 10 verbunden. Schließlich ist eine Verifizierungs-Steuereinheit 28 (als Komponente einer komplexen Menüführung) mit dem Display 11 verbunden, und eine Entscheidungsstufe 29 ist eingangsseitig mit dem üblicherweise der Bestätigung von Eingaben dienenden Softkey ("OK-Taste") 15 und ausgangsseitig mit dem zweiten Zwischenspeicher 22B sowie einem Steuereingang der Umschalteinheit 24 verbunden.

Im Rahmen der Eingabe eines neuen Wortes in das Spracherkenner-Vokabular ist die Funktionsweise dieser Komponenten wie folgt:

Der Nutzer gibt über die Tastatur 14 einen neuen Namen zur Ergänzung des Telefonbuches seines Mobiltelefons 10 (als Texteingabe) ein. In der Graphem-Phonem-Wandlerstufe 21 wird die orthografische Schreibweise unter Nutzung eines an sich bekannten Algorithmus in mögliche Phonemfolgen umgewandelt, denen jeweils ein Wahrscheinlichkeits- bzw. Konfidenzwert zugeordnet wird. Die Phonemfolgen werden im ersten Zwischenspeicher 22A zwischengespeichert, in der Ordnungsstufe 23 nach ihrem Wahrscheinlichkeitswert geordnet und schließlich im zweiten Zwischenspeicher 22B in der Reihenfolge der Wahrscheinlichkeitswerte abgelegt.

Nach Beendigung der Graphem-Phonem-Wandlung wird über die Entscheidungsstufe 29 die Umschalteinheit 24 derart angesteuert, daß die aus dem zweiten Zwischenspeicher 22B ausgelesene Phonemfolge mit dem höchsten Wahrscheinlichkeitswert der Phonem-Sprach-Wandlerstufe 26 zugeführt und über diese sowie die nachgeschaltete Audiostufe 27 und die Hörkapsel 12 eine akustische Ausgabe am Mobiltelefon ausgeführt wird. Zugleich wird über die Verifizierungs-Steuereinheit 28 im Rahmen der zugehörigen Menüführung eine Aufforderung zur Bestätigung oder zum Verwerfen des akustisch ausgegebenen Phonemstrings an den Benutzer ausgegeben. Nach Abhören der akustischen Ausgabe erzeugt der Benutzer über Betätigung der Softkeys 15 ein positives oder negatives Bestätigungssignal, welches zur Entscheidungsstufe 29 gelangt und dort zum einen den zweiten Zwischenspeicher 22B und zum anderen die Umschalteinheit 24 ansteuert.

Im Falle eines positiven Bestätigungssignals wird der im Zwischenspeicher 22B an vorderster Stelle stehende Phonemstring (also derjenige, der soeben akustisch ausgegeben wurde) über die Umschalteinheit in den Vokabularspeicher 25 zur endgültigen Abspeicherung geleitet. Im Falle eines negativen Bestätigungssignals wird der Phonemstring mit dem nächsthöheren Konfidenzwert aus dem Zwischenspeicher 22B über die Umschalteinheit 24 in die Phonem-Sprach-Wandlerstufe 26 überführt und über die Audiostufe 27 und die Hörkapsel 12 als nächste Möglichkeit zur akustischen Ausgabe gebracht. Dieses Vorgehen wird fortgeführt, bis der Benutzer eine positive Bestätigung gibt. (Ist dies bei keiner der gewonnenen Hypothesen der Fall, ist keine Spracherkennung des eingegebenen Namens möglich, und der Benutzer ist im Betrieb späterhin beispielsweise auf eine Tastatureingabe angewiesen.)

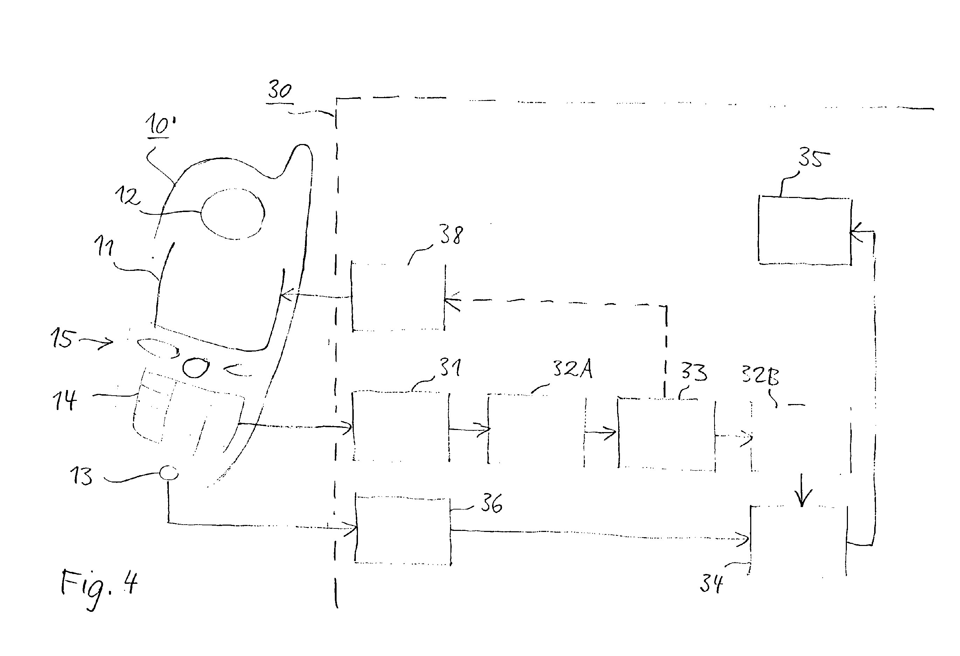

Fig. 4 zeigt eine weitere Ausführung eines Spracherkenners zur Durchführung des Verfahrens gemäß der zweiten Ausprägung des Erfindungsgedankens bei einem Mobiltelefon 10', dessen Benutzeroberfläche mit derjenigen Mobiltelefons 10 nach Fig. 3 übereinstimmt und hier nicht nochmals beschrieben wird. Jedoch ist ein hier vorgesehener Spracherkenner 30 vom Typ des Einzelworterkenners, und die Interaktion mit dem Benutzer ist dementsprechend anders organisiert.

Der Spracherkenner 30 umfaßt wiederum eine mit dem Display 11 des Mobiltelefons 10 verbundene Verifizierungs-Steuereinheit, die in Analogie zur vorgenannten Ausführungsform mit der Bezugsziffer 38 bezeichnet wird, und einen aus dem gleichen Grunde mit der Ziffer 35 bezeichneten Vokabularspeicher. Mit der alphanumerischen Tastatur 14 des Mobiltelefons 10 ist hier wiederum auch eine Graphem-Phonem-Wandlerstufe 31 verbunden. Diese ist ausgangsseitig mit einem ersten Zwischenspeicher 32A verbunden, dessen Ausgang mit einer Wortbildungsstufe 33 verbunden ist. Diese wiederum ist mit einem zweiten Zwischenspeicher 32B verbunden, in dem jedoch - im Unterschied zur ersten Ausführungsform - nicht eine geordnete Liste von Phonemfolgen-Hypothesen, sondern eine Mehrzahl von Wort-Hypothesen gespeichert wird.

Der zweite Zwischenspeicher 32B ist mit einem Einzelworterkenner 34 verbunden, welcher ausgangsseitig mit dem Vokabularspeicher 35 verbunden ist. Eingangsseitig ist der Einzelworterkenner 34 über eine Audio-Eingangsstufe 36 mit der Sprechkapsel 13 des Mobiltelefons 10 verbunden. Über eine Steuersignalverbindung steht die Wortbildungsstufe 33 mit der Verifizierungs-Steuereinheit 38 in Verbindung.

Die Funktionsweise dieser Anordnung aus dem Mobiltelefon 10' und dem Spracherkenner (im weiteren Sinne zu bezeichnen als Einzelworterkenner) unterscheidet sich von der Funktionsweise der oben beschriebenen ersten Ausführungsform nach Fig. 3 im wesentlichen dadurch, daß im Ergebnis der Graphem-Phonem-Umsetzung in der Wandlerstufe 31 letztlich nicht eine geordnete Liste von Phonemfolgen, sondern eine Menge von möglichen Einzelworten (Wort-Hypothesen) erzeugt und zwischengespeichert und diese mit einer vom Benutzer durch Einsprechen erzeugten Lautfolge verglichen wird. Die bei diesem Vergleich als die verläßlichste herausgefundene Wort-Hypothese wird als Einzelwort in den Vokabularspeicher übernommen, ohne daß eine (weitere) Bestätigung durch den Nutzer vorgesehen wäre. Im Unterschied zur ersten Ausführungsform liefert dieser Spracherkenner in der Eingabephase stets ein Ergebnis, die Erkennungsgenauigkeit wird dabei aber nicht kritisch überprüft.

Die Ausführung der Erfindung ist nicht auf diese Ausführungsbeispiele beschränkt, sondern ebenso in einer Vielzahl von Abwandlungen möglich, die im Rahmen fachgemäßen Handelns liegen.

Eine mögliche Ausführung der Erfindung findet sich auch bei der erstmaligen Inbetriebnahme eines neuen Handys. Dabei können nach Einlegen der SIM-Karte automatisch alle Namen des Telefonbuchs mit Hilfe des beschriebenen Verfahrens behandelt werden. Der Benutzer wird dann sukzessive aufgefordert, für die entsprechenden Einträge die phonetischen Unterschriften zu verifizieren.

## Patentansprüche

1. Verfahren zur Spracherkennung, insbesondere von Namen, mit einer Eingabephase zur Erstellung eines Spracherkenner-Vokabulars, die folgende Schritte aufweist:
(a) Text-Phonem-Wandlung eines als Text eingegebenen Wortes, insbesondere Namens, zur Gewinnung mindestens einer dem Wort im Spracherkenner-Vokabular vorläufig zugeordneten Phonemfolge,
(b) Phonem-Sprach-Wandlung und akustische Ausgabe der gewonnenen Phonemfolge,
(c) Auswertung einer Verifizierungs-Eingabe des Nutzers, mit den bedingten Folgeschritten:
(d1) Übernahme der vorläufigen Phonemfolge als endgültige Phonemfolge in das Spracherkenner-Vokabular im Ansprechen auf eine bestätigende Eingabe oder
(d2) Rückkehr zum Schritt (a) zur Gewinnung einer anderen vorläufigen Phonemfolge oder zum Schritt (b) zur Phonem-Sprach-Wandlung einer alternativ bereitgestellten anderen vorläufigen Phonemfolge im Ansprechen auf eine nichtbestätigende Verifizierungs-Eingabe und Wiederholung der Schritte (a) bis (c) bzw. (b) und (c) bis zu einer bestätigenden Verifizierungs-Eingabe.

2. Verfahren nach Anspruch 1,
**dadurch gekennzeichnet, daß**
im Schritt (a) mehrere vorläufige Phonemfolgen als Spracherkennungshypothesen gewonnen und unter Kennzeichnung ihres Wahrscheinlichkeitswertes gespeichert und in der Rangfolge ihrer Wahrscheinlichkeitswerte sukzessive den Schritten (b) und (c) zugrundegelegt werden, bis für eine der vorliegenden Phonemfolgen der Schritt (d1) ausführbar ist.

3. Verfahren nach Anspruch 1 oder 2,
**dadurch gekennzeichnet, daß**
im Schritt (a) der Wahrscheinlichkeitswert der oder jeder vorläufigen Phonemfolge ermittelt und nach dem Schritt (a) ein Schritt (e) des Vergleiches des ermittelten Wahrscheinlichkeitswertes mit einem vorbestimmten Schwellwert ausgeführt wird, mit den bedingten Folgeschritten:
(f1) Übernahme der geprüften vorläufigen Phonemfolge als endgültige Phonemfolge in das Vokabular im Ansprechen auf eine Überschreitung des Schwellwertes durch den dieser Phonemfolge zugeordneten Wahrscheinlichkeitswert oder
(f2) Übergang zum Schritt (b) im Ansprechen auf eine Unterschreitung des Schwellwertes durch den der Phonemfolge zugeordneten Wahrscheinlichkeitswert.

4. Verfahren zur Spracherkennung, insbesondere von Namen, mit einer Eingabephase zur Erstellung eines Spracherkenner-Vokabulars, die folgende Schritte aufweist:
(a) Text-Phonem-Wandlung eines als Text eingegebenen Wortes, insbesondere Namens, zur Gewinnung einer dem Wort im Spracherkenner-Vokabular vorläufig zugeordneten Menge von Phonemen,
(b) Bildung von Wort-Hypothesen aus den gewonnenen Phonemen,
(c) Auswertung einer Spracheingabe des Namens durch den Nutzer unter Zugriff auf die gespeicherten Wort-Hypothesen als Einzelworterkennung und
(d) Übernahme des bei der Einzelworterkennung als Wort mit höchster Zuverlässigkeit ermittelten Namens in das Spracherkenner-Vokabular.

5. Verfahren nach einem der vorangehenden Ansprüche,
**dadurch gekennzeichnet, daß**
vor dem Schritt (a) im Ansprechen auf eine Landessprach-Eingabe ein landessprachliches Spracherkennungsmodell oder ein landessprachlich spezifizierter Verarbeitungszweig eines multilingualen Spracherkennungsmodells, insbesondere Hidden-Markov-Modells, zur Gewinnung der mindestens einen vorläufigen Phonemfolge bzw. der Menge von Phonemen aktiviert wird.

6. Spracherkenner zur sprecherunabhängigen Spracherkennung, insbesondere von Namen, mit
- Eingabemitteln zur Text-Eingabe,
- einem Spracherkenner-Modul zur Text-Phonem-Wandlung eingegebener Worte,
- einem Vokabularspeicher zur Speicherung gewonnener Phonemfolgen im Vokabular des Spracherkenners,
- einem Sprachsynthese-Modul zur Phonem-Sprache-Wandlung und akustischen Ausgabe von Phonemfolgen,
- Eingabemitteln zur Ausführung einer Verifizierungs-Eingabe bezüglich einer akustisch ausgegebenen Phonemfolge,
- Entscheidungsmitteln zur Steuerung einer Übernahme einer akustisch ausgegebenen Phonemfolge in den Vokabularspeicher oder zu einer wiederholten Aktivierung des Sprachsynthese-Moduls und wahlweise Spracherkenner-Moduls im Ansprechen auf die Verifizierungs-Eingabe.

7. Spracherkenner nach Anspruch 6, **gekennzeichnet durch**
einen Phonemfolgen-Zwischenspeicher zur geordneten Zwischenspeicherung mehrerer **durch** das Spracherkenner-Modul parallel gelieferter vorläufiger Phonemfolgen unter Kennzeichnung ihres Wahrscheinlichkeitswertes und zur Ausgabe der Phonemfolgen in der Reihenfolge des Wahrscheinlichkeitswertes.

8. Spracherkenner nach Anspruch 5 oder 6,
**gekennzeichnet durch**
eine Wahrscheinlichkeitswert-Vergleichereinrichtung zum Vergleich von Wahrscheinlichkeitswerten vorläufiger Phonemfolgen in einem vorgespeicherten Schwellwert und
einer mit dem Ausgang der Wahrscheinlichkeitswert-Vergleichereinrichtung verbundenen Verfahrensablauf-Entscheidungseinrichtung zur sofortigen Abspeicherung einer Phonemfolge im Vokabularspeicher oder zu ihrer Überführung in das Sprachsynthese-Modul im Ansprechen auf ein Ausgangssignal der Wahrscheinlichkeitswert-Vergleichereinrichtung.

9. Spracherkenner zur sprecherunabhängigen Spracherkennung, insbesondere von Namen, mit
- Eingabemitteln zur Text-Eingabe,
- einem Spracherkenner-Modul zur Text-Phonem-Wandlung eingegebener Worte und zur Bildung von Wort-Hypothesen aus den gewonnenen Phonemen,
- Spracheingabemitteln,
- einer mit den Spracheingabemitteln einerseits und dem Spracherkennermodul andererseits verbundenen Verarbeitungseinheit zur Bestimmung der wahrscheinlichsten Wort-Hypothese als Einzelwort und
- einem Vokabularspeicher zur Speicherung des gewonnenen Einzelwortes im Vokabular des Spracherkenners.

10. Spracherkenner nach einem der Ansprüche 6 bis 9,
**gekennzeichnet durch**
Landessprach-Eingabemittel zur Eingabe einer Landessprache sowie mit diesen verbundene Verarbeitungszweig-Entscheidungsmittel zur Auswahl eines landessprach-spezifischen Verarbeitungsmodells oder Verarbeitungszweiges eines multilingualen Verarbeitungsmodells im Ansprechen auf die Landessprach-Eingabe.
